# EUROPEAN PATENT SPECIFICATION

(11) **EP 4 252 059 B1**
(45) Date of publication and mention of the grant of the patent: **19.08.2026**
(21) Application number: 21820547.4
(22) Date of filing: 26.11.2021
(51) Int. Cl.: G02B 21/30, G02B 21/33

(54) **MICROSCOPE COMPRISING AN IMMERSION SYSTEM FOR SUPPLYING IMMERSION LIQUID TO AN IMMERSION MICROSCOPE OBJECTIVE**
MIKROSKOP MIT EINEM IMMERSIONSSYSTEM ZUR ZUFUHR VON IMMERSIONSFLÜSSIGKEIT ZU EINEM IMMERSIONSMIKROSKOPOBJEKTIV
MICROSCOPE COMPRENANT UN SYSTÈME D'IMMERSION DESTINÉ À FOURNIR UN LIQUIDE D'IMMERSION À UN OBJECTIF DE MICROSCOPE À IMMERSION

(30) Priority: 27.11.2020 EP 20210438
(43) Date of publication of application: 04.10.2023
(73) Proprietor: Leica Microsystems CMS GmbH, 35578 Wetzlar (DE)
(72) Inventor: CHRIST, Stefan, 35578 Wetzlar (DE)
(74) Representative: Schaumburg und Partner Patentanwälte mbB
(86) International application number: PCT/EP2021/083168
(87) International publication number: WO 2022/112503

(56) References cited:
- EP-A1- 1 980 892
- US-A1- 2011 299 157
- US-B1- 6 980 293
- US-B2- 7 623 289

## Description

### Field

The present inventive concept relates to a microscope comprising an immersion system for supplying an immersion liquid to a front lens of a microscope objective.

### Background

For microscopic examination of living cells it is expedient to use an incubation system to provide an incubation atmosphere of a predetermined composition and/or of a predetermined temperature to the sample to be examined. The most relevant configurations of such incubation systems are stagetop incubators on the one hand, and cage incubators on the other hand. A stagetop incubator provides a small chamber including a microenvironment around most of the topside of the sample itself, whereas a cage incubator provides a more or less large cavity in which for example various other technical instruments can be integrated together with the sample under an incubation atmosphere. Commonly, a cage incubator encloses largely the microscope itself. It is, however, more advantageous to use a smaller sample chamber incubator proposed by the applicant, which only encloses, in case of an inverted microscope, the illumination unit and the upper half of the microscope stage including the sample. Other cage incubators also include the microscope objective and the objective revolver as well as the sample bottom side or microscope stage bottom side in the incubated volume. In addition, especially for use with a stagetop incubator, there are devices available for controlling the temperature of the microscope objective itself, for instance, by silicone pads with integrated heating foils, wrapped around the objective.

Advances in automation of microscopy led to the development of auto immersion objectives. These objectives are able to generate and control the immersion liquid supply. For example, immersion liquid is supplied from a reservoir to an immersion liquid cap at the front lens of the microscope objective. For immersion with water objectives, water is usually drained from a water reservoir with uncontrolled temperature, located somewhere inside or outside the microscope. Thus, the supply of fresh immersion liquid results in temperature variations negatively affecting the sample of living cells during examination.

US 7,623,289 B2 suggests an immersion system having an immersion liquid reservoir and a supply line for supplying immersion liquid from the reservoir to the front lens of the microscope objective, a heating unit being integrated into the supply line. Furthermore, another heater is mounted in an objective cap, the objective cap comprising a temperature sensor and an immersion liquid holding cap. A control unit regulates the temperature of the heating unit integrated into the supply line and that of the heater integrated into the objective cap according to the temperature information from this sensor. However, such a set up might not be ideal due to interferences, especially if additional sensor functionalities are to be integrated into an immersion liquid cap. Further, the integration of a heater into the immersion liquid cap and/or into the microscope objective itself is complex and prone to interferences with other cap sensors. Additionally, depending on the movement of the sample relative to the objective and on the necessary pump cycles, increasing amounts of immersion liquid must be injected and temperature controlled in the space between the sample and the objective. This increases the temperature control load. US 6,980,293 B1 relates to an immersion medium supply apparatus having an immersion medium which is filled between an observation sample and a liquid immersion objective, and a temperature control unit which controls the immersion medium to a predetermined temperature. EP 1980892 A1 relates to a microscope apparatus including a specimen container for containing a specimen and an immersion-liquid removing unit for removing the immersion liquid from the space between an objective lens and the specimen container, the immersion-liquid removing unit includes a nozzle for ejecting compressed air to the space between the objective lens and the specimen container.

US 2011/299157 A1 relates to a method and a system for mounting a specimen on a slide.

In an inverted microscope configuration, for instance, the sample is located at the bottom of the sample container like wells of a microplate. In a high sophisticated set up for an incubation solution, the temperature around the sample and the objective tip must be kept within +/- 0.1° C tolerance or better at all times. With the existing temperature-controlled immersion solutions, such a highly demanding temperature control is not possible.

### Summary

The present inventive concept provides a microscope comprising an improved immersion system for supplying an immersion liquid to a front lens of a microscope objective according to the independent claim. Advantageous embodiments are the subject-matter of the respective dependent claims and of the following description.

As used herein, the term "and/or" includes any and all combinations of one or more of the associated listed items and may be abbreviated as "/".

Further embodiments and advantages of the present inventive concept are described below in connection with the following figures.

Short description of the figures
- Figure 1: schematically shows an embodiment of a part of an immersion system not covered by the subject-matter of the claims including a microscope objective and a part of a microscope stage for microscopic imaging of a sample,
- Figure 2: schematically shows a cross section of the heating unit shown in Figure 1,
- Figure 3: schematically shows another embodiment of a part of an immersion system not covered by the subject-matter of the claims including a microscope objective and a part of a microscope stage for microscopic imaging of a sample,
- Figure 4: schematically shows a cross section of the heating unit shown in Figure 3,
- Figure 5: schematically shows the embodiment of Figure 1 including a control unit,
- Figure 6: schematically shows a further embodiment of an immersion system of a microscope according to the invention,
- Figure 7: schematically shows a further embodiment of an immersion system not covered by the subject-matter of the claims,
- Figure 8: schematically shows the embodiment of Figure 7 including a control unit,
- Figure 9: schematically shows an embodiment of a microscope not covered by the subject-matter of the claims, and
- Figure 10: schematically shows a detailed view of the embodiment shown in Figure 6.

### Detailed description

In the following, the figures are described comprehensively, same reference signs designating same or at least structurally identical components.

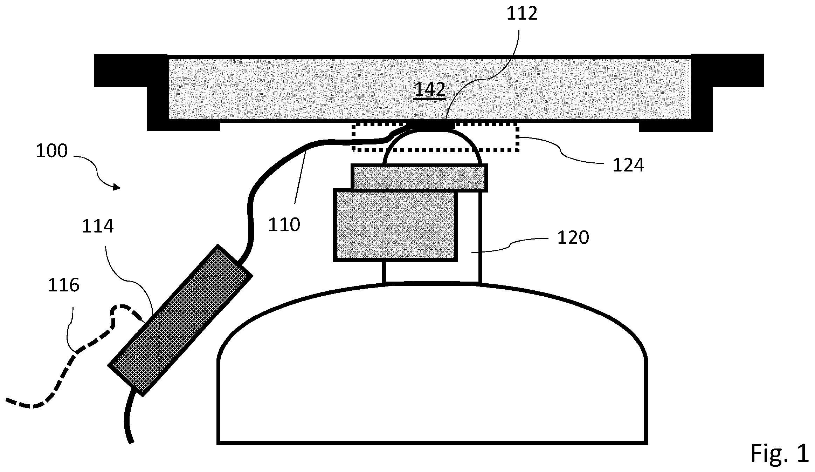

Figure 1 schematically shows an immersion microscope objective 120 of high magnification and high aperture including a motorized auto-correcting lens system. The front lens at the top of the microscope objective 120 is designated 122. At the microscope objective tip an immersion liquid cap 124 is arranged for holding back immersion liquid which is supplied between the front lens 122 and the bottom of the sample carrier 144 by means of the supply line 110. A sample 142 which is positioned in the sample carrier 144 can be imaged by a well-known inverted microscope including the immersion objective 120 as shown in Figure 1. The sample carrier 144 is typically inserted in a microscope stage insert or, more generally, in a microscope stage 140.

Figure 1 further shows a part of an immersion system comprising a heating unit 114 integrated into the immersion liquid supply line 110 leading up to the immersion site at the objective tip. A temperature sensor 116 is arranged at the heating unit 114 to detect a temperature corresponding to the temperature of the immersion liquid supplied to the immersion site.

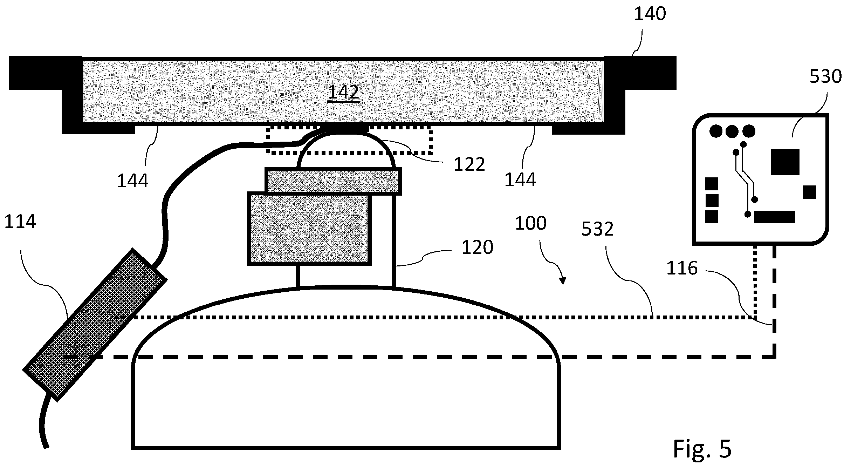

As can be seen from Figure 1, no heater and no temperature sensor is arranged in the region of the front lens 122 of the objective 120 or of the immersion liquid cap 124. This region can thus be kept free for other kinds of sensors and instruments as already explained above. More details regarding the temperature control will be discussed in connection with Figure 5 below.

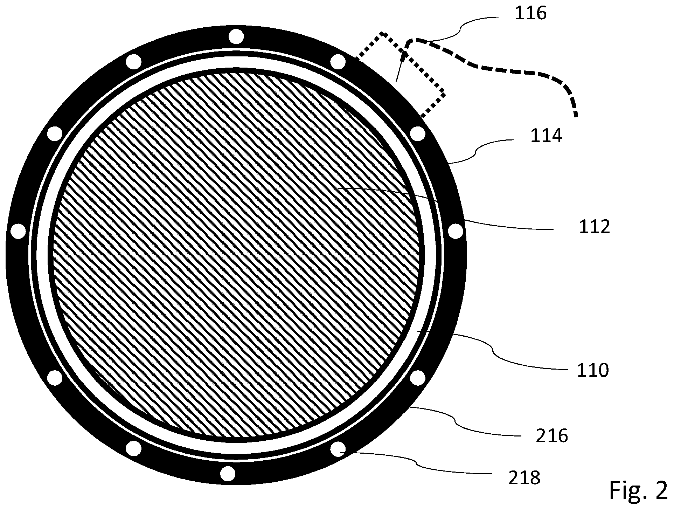

Preferably, the heating unit 114 is formed as a heatable sleeve encircling the immersion liquid supply line 110, a cross section of an embodiment of a heatable sleeve is shown in Figure 2.

Figure 2 schematically shows a cross section of a heating unit 114 in the form of a heatable sleeve and of an immersion liquid supply line 110. As can be seen from Figure 2, a sleeve pad 216 concentrically encircles the immersion liquid supply line 110. The sleeve pad 216 can be made of silicone. Heating wires 218 are embedded in the sleeve pad 216. A temperature sensor is arranged at the sleeve pad 216, here at the outside of the sleeve pad, but can also be arranged between the sleeve pad 216 and the outside of the supply line 110.

By providing power to the heating unit 114, an immersion liquid 112 conducted through the supply line 110 is heated by means of heat transfer from the heating wires 218 to the immersion liquid 112. The temperature detected by the temperature sensor 116 corresponds to the temperature of the immersion liquid 112 and thus to the temperature at the immersion site.

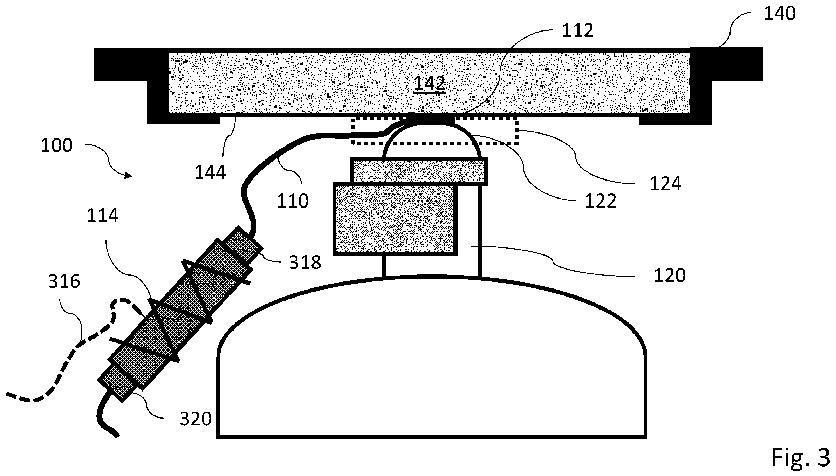

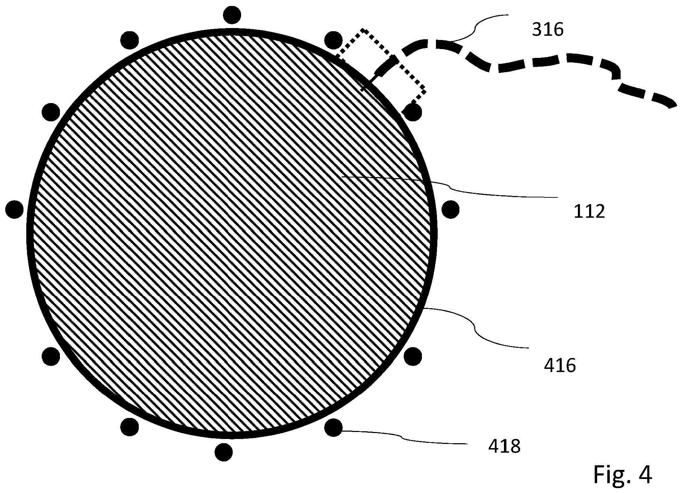

Figure 3 schematically shows another embodiment of a heating unit 114 in a configuration otherwise similar to that of Figure 1. Therefore, reference is made to Figure 1 concerning the microscope components except for the heating unit 114. In this embodiment, the heating unit 114 is a heatable hollow adapter piece which forms a part of the supply line 110. The adapter piece is connected to the supply line 110 at a first adapter connection 318 and a second adapter connection 320. A temperature sensor 316 is arranged at the heating unit 114 as will be shown in more detail in Figure 4.

Figure 4 schematically shows a cross section through the heating unit 114 of Figure 3. The heating unit 114 comprises a metal adapter tube 416 which is connected to the supply line 110 by adapter connections 318 and 320 (as shown in Figure 3). The metal adapter tube 416 is surrounded by heating wires 418. Immersion liquid 112 runs through the tube 416 when immersion liquid is supplied to the immersion site. A temperature sensor 316 is connected to the adapter tube 416 and, as can be seen from Figure 4, extends into the interior of the adapter tube 416 to detect the temperature of the immersion liquid 112 itself. Again, the temperature of the immersion liquid at this position corresponds to the temperature of the immersion liquid at the immersion site. As the metal adapter tube 416 has a high thermal conductivity, immersion liquid 112 inside the tube 416 can be effectively heated by the heating wires 418.

Figure 5 schematically shows the situation of Figure 1 including a control unit 530 for controlling the temperature of the immersion liquid at the immersion site, i.e. at the objective tip or, in other words, between the front lens 122 of the microscope objective 120 and the bottom of the sample carrier 144. As all components except for the control unit 530 of Figure 5 are discussed in connection with Figure 1, reference is made to Figure 1 in this respect. As can be seen from Figure 5, the control unit 530 is connected via a power control line 532 to the heating unit 114 to control a power of the heating unit 114, particularly the heating power of the heating wires 218 (see Figure 2). The resulting temperature is detected via temperature sensor 116 located at the heating unit 114 and connected to the control unit 530 for delivering a temperature signal to the control unit 530. The temperature detected by temperature sensor 116 corresponds, as already mentioned above, to the specific temperature of the immersion liquid at the site of immersion. After calibrating the system in pre-experiments, the correlation of the detected temperature and the temperature at the immersion site can be described. Using this correlation it is possible to precisely control the immersion liquid temperature at the immersion site at the objective tip by only using the temperature values detected by temperature sensor 116, particularly without using a temperature sensor in the region of the objective tip. In the embodiment shown in Figure 5, a closed-loop control regulates the power of the heating unit 114 via power control line 532 such that the temperature of the immersion liquid at the immersion site is kept constant at a predetermined temperature.

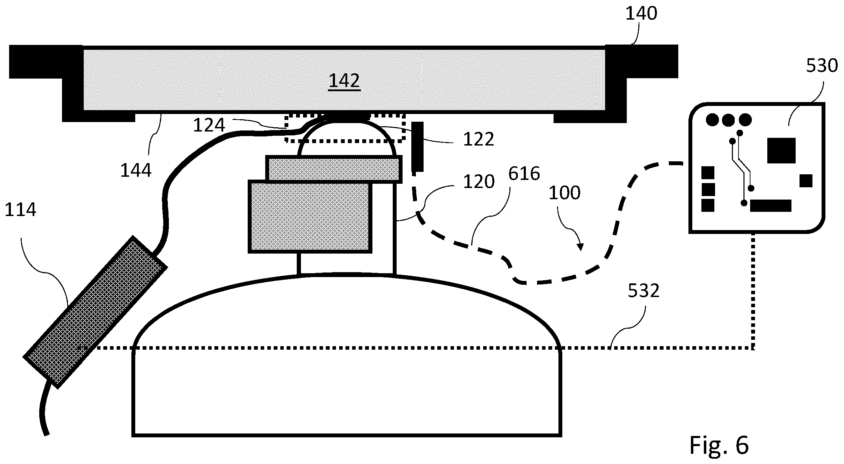

Figure 6 shows another embodiment of a configuration similar to the one shown in Figure 5, except for the temperature sensor used. Therefore, reference is made to Figure 5 in this respect. In the embodiment of Figure 6, a contactless temperature sensor 616 is used. The temperature sensor 616 is arranged near the front lens 122 of the microscope objective 120 for contactless detection of a temperature in the region of the front lens 122 and the immersion liquid cap 124. The temperature sensor 616 is connected to the control unit 530. Again, the control unit 530 is connected to the heating unit 114 by means of the power control line 532.

The contactless temperature sensor 616 detects a temperature which corresponds to a temperature of the immersion liquid at the immersion site. The corresponding correlation of these temperatures can be determined in pre-experiments. In the figures, the temperature sensors are designated 116, 316, 616; it is clear to a person skilled in the art that the actual sensor, depending on the kind of temperature sensor used, may be in the tip of the sensor, i.e. at one end of the line designated 116, 316 or 616.

Regarding the temperature control in the embodiment of Figure 6, reference is made to the explanations in connection with Figure 5.

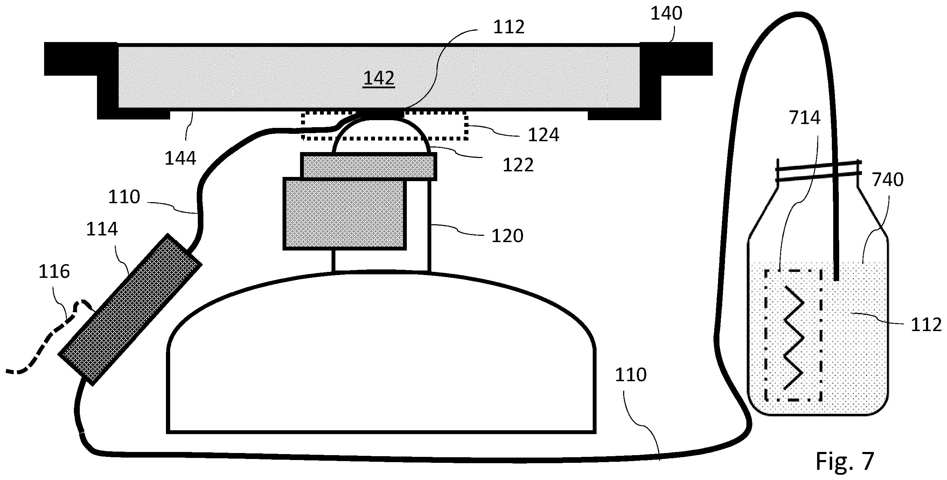

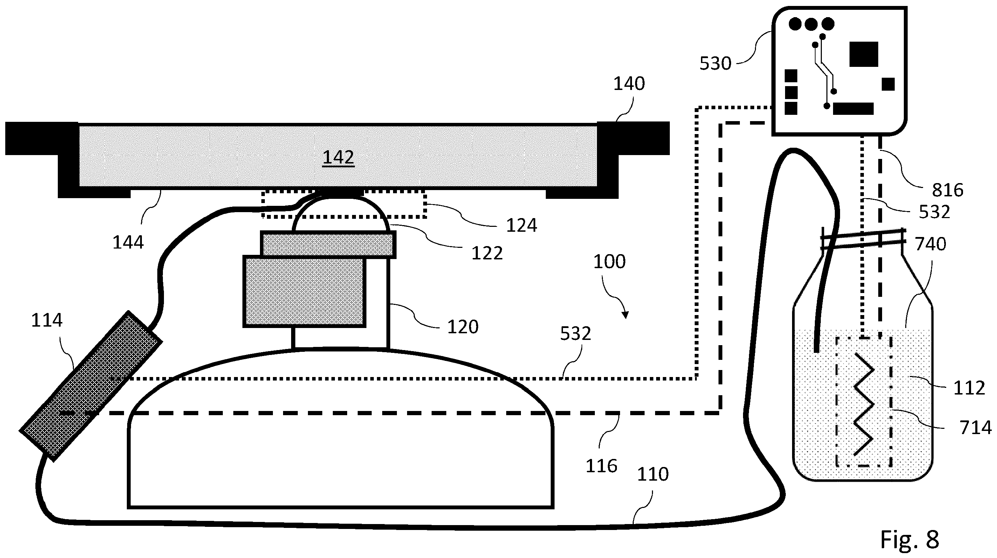

Figure 7 schematically shows another embodiment of an immersion system including an immersion liquid reservoir 740 containing immersion liquid 112. Immersion liquid 112 is pumped through supply line 110 to the heating unit 114. Inside the immersion liquid reservoir 740 a reservoir heater 714 is arranged for directly heating the immersion liquid 112 inside the reservoir 740. Heating by the reservoir heater 714 can be regarded a preheating in order to reduce the heating load of the heating unit 114. Concerning the remaining components shown in Figure 7, reference is made to Figure 1 which shows a similar configuration. More details of the configuration of Figure 7 are described in connection with Figure 8.

Figure 8 schematically shows another embodiment of an immersion system which largely corresponds to the one shown in Figure 5. Therefore, reference is made to the explanations above in connection with Figure 5. In the embodiment of Figure 8, however, the immersion liquid reservoir 740 and the reservoir heater 714 of Figure 7 are included. The reservoir heater 714 is connected via a power control line 532 to the control unit 530. Furthermore, a reservoir temperature sensor 816 is arranged at the reservoir heater 714 and/or inside the immersion liquid 112 within the reservoir 740 for detecting a temperature corresponding to a temperature of the immersion liquid inside the reservoir 740. The corresponding temperature signal is output and received by the control unit 530. On the other hand, as already explained in connection with Figure 5, the control unit receives a temperature signal from the temperature sensor 116 arranged at the heating unit 114, and the control unit 530 is connected to the heating unit 114 via another power control line 532.

In the embodiment shown in Figure 8, the control unit 530, in the first place, controls the power of the reservoir heater 714 depending on the temperature signal of the temperature sensor 116. Only in second place, control unit 530 controls the power of the reservoir heater 714 depending on the reservoir temperature signal of the reservoir temperature sensor 816. This makes possible a two-stage regulation of the temperature of the immersion liquid 112 supplied to the immersion liquid cap 124, or, more generally, to the immersion site. In a first step, the control unit 530 can determine a temperature difference between the temperature detected by temperature sensor 116 and the temperature detected by temperature sensor 816. By controlling the power of each of the reservoir heater 714 and the heating unit 114, the control unit 530 can achieve a reduction of the determined temperature difference. Following this coarse adjustment of the temperature, a fine adjustment of the temperature can be accomplished by the heating unit 114 itself, as already described in connection with Figure 5.

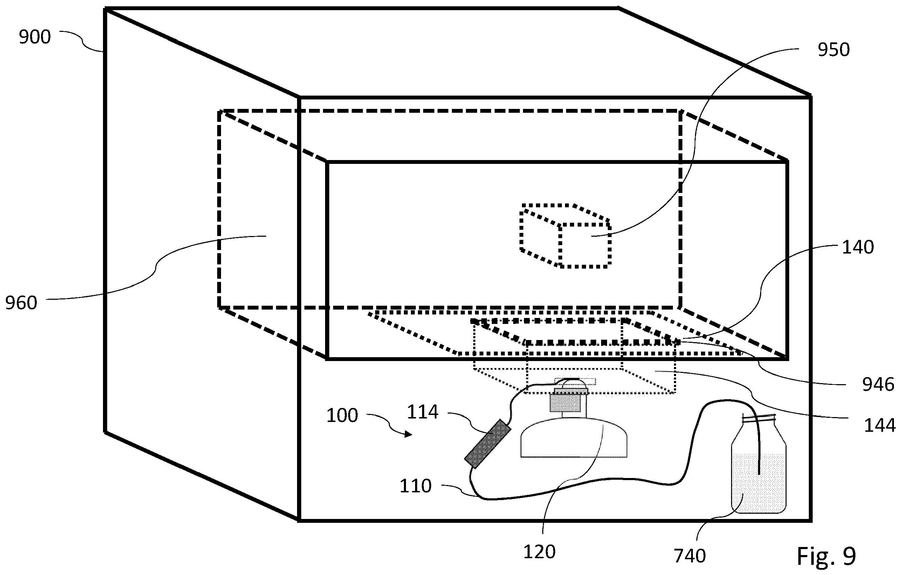

Figure 9 schematically shows an embodiment of a microscope 900. In this embodiment, microscope 900 is an inverted microscope comprising an incubated sample chamber 960 for incubating the sample chamber, i.e. the separated space including illumination optics 950 of the microscope 900 and the upper part of the microscope stage 140 and of the sample carrier 144 wherein a sample to be examined is positioned. Below the incubated sample chamber 960 imaging optics are installed comprising the microscope objective 120 as shown in Figure 9. Further microscope components necessary for microscopic imaging of a sample in the sample carrier 144 are not shown in Figure 9 and are as such known from the prior art

The microscope 900 as shown in Figure 9 further comprises a system as already explained in detail above. The system 100 may be the system as shown in Figure 8, only the essential components of such a system 100 are shown in Figure 9. The sample carrier 144 containing samples to be examined is inserted into a microscope stage insert 946 which is placed into the microscope stage 140 as shown in Figure 9. By relative movement of the microscope stage 140 in relation to the microscope objective 120, a sample of interest can be placed above the microscope objective tip. Immersion liquid 112 is supplied from the immersion liquid reservoir 740 through the supply line 110 to the heating unit 114 integrated in the supply line 110. The temperature of the immersion liquid 112 is controlled at a predetermined temperature value by any one of the different possibilities explained above in connection with Figures 1 to 8. Thus, the temperature of the immersion liquid 112 at the immersion site, here between the front lens 122 of the microscope objective 120 and the bottom of the sample carrier 144, can be kept within +/- 0.1° C tolerance at the desired predetermined temperature. This avoids any temperature induced harm to the sample like living cells examined in the microscope 900.

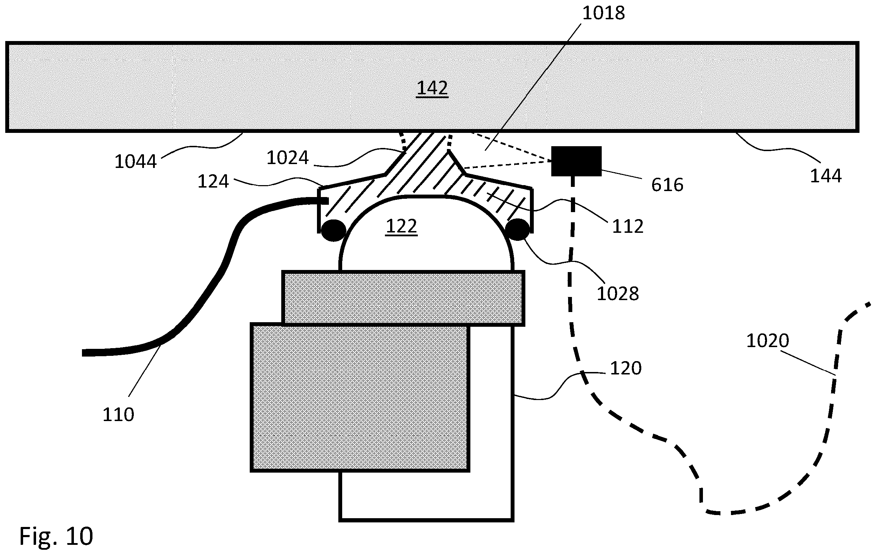

Figure 10 is a more detailed view of the embodiment shown in Figure 6. As can be seen the immersion liquid cap 124 is arranged at a front end of the microscope objective 120, i.e. at the front lens 122 thereof. The immersion liquid cap 124 is arranged such that immersion liquid 112 (typically distilled water) is held between the front lens 122 and the bottom surface of the sample carrier 144. The immersion liquid extends from an upper end 1024 of the immersion liquid cap 124 to the bottom surface 1044 of the sample carrier 144 due to surface tension of the immersion liquid (indicated as a meniscus in dotted lines). A sealing 1028 is provided between the front lens 122 and a lower end of the immersion liquid cap 124 in order to impede loss of immersion liquid (as far as possible). The immersion liquid is supplied by supply line 110.

As already mentioned in connection with Figure 6, a contactless (first) temperature sensor 616 is arranged at a distance from the immersion liquid cap 124. A sensor line 1020 connects the contactless temperature sensor 616 with the control unit, in order to transmit detected temperature values. The contactless temperature sensor 616 is preferably an (thermal) infrared sensor. Use of an infrared camera is also possible. The contactless temperature sensor 616 has a field of detection 1018 (typically cone-shaped), which includes the immersion liquid extending from the upper end 1024 of the immersion liquid cap 124 to the bottom surface 1044 of the sample carrier 144. That is, the contactless temperature sensor 616 is arranged such that its field of detection 1018 includes the region between the upper end of the sample carrier 144 and the bottom surface 1044 of the sample carrier; in other words, the contactless temperature sensor 616 is aligned such that its field of detection 1018 includes a region immediately above the upper end 1024 of the immersion liquid cap 124. As shown, the contactless temperature sensor is arranged such that the field of detection 1018 further includes a part (near the upper end) of the immersion liquid cap 124 and a part of the bottom surface 1044 of the sample carrier 144. It should be noted that the terms "upper", "above" are to be understood as defined by the normal orientation during use of the microscope.

The contactless temperature sensor 616 might be positioned at a distance from 0,5 cm to 3 cm next to the cap 124, having a detection area of 0,5 mm² to 1 mm².

The control unit (not shown in Figure 10, cf. however Figure 6) is configured to use (for controlling the power of the heating unit) a look-up table that correlates temperatures as detected by the contactless temperature sensor 616 (i.e. the temperature signal from the contactless temperature sensor) with corresponding temperatures inside the sample carrier 144 or with corresponding temperatures of the sample 142. Such a correlation may be determined prior to use of the microscope during a calibration, wherein a temperature sensor is arranged inside the sample carrier 144 or a test sample, in order to determine temperatures detected by the contactless temperature sensor and corresponding temperatures inside the sample carrier or of the test sample. The use of the loop-up table for controlling the power of the heating unit has the advantage of allowing a precise control of the temperature of the sample, in particular without the necessity of other temperature sensors than the contactless temperature sensor (such as an infrared sensor).

A contactless temperature sensor also avoids any heat being conducted away from or into the area of temperature measurement and thus contributes to a highly stable temperature of the sample, which should be in a range of less than ± 0.3 °C.

### List of reference signs

- 100: immersion system
- 110: supply line
- 112: immersion liquid
- 114: heating unit
- 116: temperature sensor
- 120: microscope objective
- 122: front lens
- 124: immersion liquid cap
- 140: microscope stage
- 142: sample
- 144: sample carrier

- 216: sleeve pad
- 218: heating wires

- 316: temperature sensor
- 318: adapter connection
- 320: adapter connection

- 416: metal adapter tube
- 418: heating wires

- 530: control unit
- 532: power control line

- 616: temperature sensor

- 740: immersion liquid reservoir

- 816: reservoir temperature sensor
- 900: microscope
- 946: microscope stage insert
- 950: illumination optics
- 960: incubated sample chamber

- 1018: field of detection of the temperature sensor
- 1020: sensor line
- 1024: upper end of the immersion liquid cap
- 1028: sealing
- 1044: bottom surface of the sample carrier

## Claims

1. A microscope (900), comprising
a microscope objective (120), and
an immersion system (100) for supplying an immersion liquid (112) to a front lens (122) of the microscope objective (120), the immersion system (100) comprising
an immersion liquid supply line (110) configured for supplying immersion liquid (112) from an immersion liquid reservoir (740) to the front lens (122) of the microscope objective (120),
a heating unit (114) integrated into the immersion liquid supply line (110),
a first temperature sensor (616) for detecting a temperature and for outputting a temperature signal corresponding to the detected temperature,
a control unit (530) connected to said first temperature sensor (616) and to the heating unit (114) for controlling a power of the heating unit (114) depending on the temperature signal received from said first temperature sensor (616), such that the detected temperature corresponds to a predetermined temperature, and
a microscope stage (140) configured to accommodate a sample carrier (144) and/or a sample (142), the immersion system (100) being configured to supply immersion liquid (112) between the front lens (122) of the microscope objective (120) and the sample carrier (144) and/or the sample (142), when accommodated;
**characterized by**
said first temperature sensor (616) being arranged at a predetermined distance of 1 to 30 mm to the microscope objective (120) for contactless detection of a temperature corresponding to a temperature of the immersion liquid (112) supplied to the front lens (122) of the microscope objective (120),
wherein no heater is mounted in or at the microscope objective,
wherein the first temperature sensor (616) is arranged such that a field of detection (1018) of the first temperature sensor further includes a part of a bottom surface (1044) of the sample carrier (144) and/or a part of the sample (142),
wherein the control unit (530) is configured to use a look-up table for controlling the power of the heating unit (114); wherein the look-up table includes a correlation of temperature signals as detected by the first temperature sensor with corresponding temperatures inside the sample carrier (144) or with corresponding temperatures of the sample (142).

2. The microscope of claim 1, wherein the heating unit (114) is in the form of a heatable sleeve encircling the immersion liquid supply line (110).

3. The microscope of claim 2, comprising a second temperature sensor (116) arranged in or at the heatable sleeve and connected to the control unit, wherein the control unit (530) is configured to control the power of the heating unit depending additionally on a temperature signal received from the second temperature sensor.

4. The microscope of claim 1, wherein the heating unit (114) is a heatable hollow adapter piece connected to the immersion liquid supply line (110) and configured to heat immersion liquid (112) running through an adapter tube of the heatable hollow adapter piece.

5. The microscope of claim 4, comprising a third temperature sensor (316) arranged inside the heatable hollow adapter piece, such that the third temperature sensor extends into the interior of the adapter tube;
wherein the control unit (530) is connected to the third temperature sensor (316) and configured to control the power of the heating unit depending on a temperature signal received from the third temperature sensor.

6. The microscope of claim 1, wherein no temperature sensor is arranged in or at the heating unit (114).

7. The microscope of any one of the preceding claims, comprising a reservoir heater (714) configured for heating the immersion liquid reservoir (740).

8. The microscope of claim 7, wherein the reservoir heater (714) is connected to the control unit (530), wherein the control unit (530) is configured to control a power of the reservoir heater (714) depending on the temperature signal of the first temperature sensor (616).

9. The microscope of claim 8, wherein the reservoir heater (714) comprises a reservoir temperature sensor (816) for detecting a temperature corresponding to a temperature of the immersion liquid reservoir (740) and for outputting a temperature signal corresponding to the detected temperature, said reservoir temperature sensor (816) being connected to the control unit (530), wherein the control unit (530) is configured to control the power of the reservoir heater (714) depending additionally on the reservoir temperature signal of the reservoir temperature sensor (816).

10. The microscope of any one of the preceding claims, comprising an immersion liquid cap (124) arranged at the front lens (122) for holding back immersion liquid; and wherein the first temperature sensor (616) is arranged such that the field of detection (1018) of the first temperature sensor includes an upper end (1024) of the immersion liquid cap and a region immediately above the upper end.

11. The microscope of any one of the preceding claims, wherein the first temperature sensor (616) is an infrared sensor.

12. The microscope of any one of the preceding claims, further comprising the immersion liquid reservoir (740).

## Patentansprüche

1. Mikroskop (900), umfassend
ein Mikroskopobjektiv (120), und
ein Immersionssystem (100) zur Zuführung einer Immersionsflüssigkeit (112) zu einer Frontlinse (122) des Mikroskopobjektivs (120), das Immersionssystem (100) umfassend
eine Immersionsflüssigkeitsversorgungsleitung (110), die so konfiguriert ist, dass sie eine Frontlinse (122) des Mikroskopobjektivs (120) mit Immersionsflüssigkeit (112) aus einem Immersionsflüssigkeitsbehälter (740) zuführt,
eine in die Immersionsflüssigkeitsversorgungsleitung (110) integrierte Heizeinheit (114),
einen ersten Temperatursensor (616) zum Erfassen einer Temperatur und zum Ausgeben eines Temperatursignals entsprechend der erfassten Temperatur, eine Steuereinheit (530), die mit dem ersten Temperatursensor (616) und mit der Heizeinheit (114) verbunden ist, zum Steuern einer Leistung der Heizeinheit (114) in Abhängigkeit von dem von dem ersten Temperatursensor (616) empfangenen Temperatursignal, sodass die erfasste Temperatur einer vorbestimmten Temperatur entspricht, und
einen Mikroskoptisch (140), ausgebildet zur Aufnahme eines Probenträgers (144) und/oder einer Probe (142), wobei das Immersionssystem (100) ausgebildet ist, Immersionsflüssigkeit (112) zwischen der Frontlinse (122) des Mikroskopobjektivs (120) und dem Probenträger (144) und/oder der Probe (142) zuzuführen, wenn aufgenommen;
**gekennzeichnet durch**
dass der erste Temperatursensor (616) in einem vorbestimmten Abstand von 1 bis 30 mm zu dem Mikroskopobjektiv (120) zur berührungslosen Erfassung einer Temperatur angeordnet ist, die einer Temperatur der der Frontlinse (122) des Mikroskopobjektivs (120) zugeführten Immersionsflüssigkeit (112) entspricht,
wobei keine Heizung in oder an dem Mikroskopobjektiv montiert ist,
wobei der erste Temperatursensor (616) so angeordnet ist, dass ein Erfassungsbereich (1018) des ersten Temperatursensors ferner einen Teil einer Bodenfläche (1044) des Probenträgers (144) und/oder einen Teil der Probe (142) einschließt,
wobei die Steuereinheit (530) ausgebildet ist, eine Nachschlagetabelle zum Steuern der Leistung der Heizeinheit (114) zu verwenden; wobei die Nachschlagetabelle eine Korrelation von Temperatursignalen, wie sie durch den ersten Temperatursensor erfasst werden, mit entsprechenden Temperaturen innerhalb des Probenträgers (144) oder mit entsprechenden Temperaturen der Probe (142) umfasst.

2. Mikroskop nach Anspruch 1, wobei die Heizeinheit (114) in Form einer beheizbaren Manschette vorliegt, die die Immersionsflüssigkeitsversorgungsleitung (110) umgibt.

3. Mikroskop nach Anspruch 2, umfassend einen zweiten Temperatursensor (116), der in oder an der beheizbaren Hülse angeordnet und mit der Steuereinheit verbunden ist, wobei die Steuereinheit (530) ausgebildet ist, die Leistung der Heizeinheit zusätzlich in Abhängigkeit von einem von dem zweiten Temperatursensor empfangenen Temperatursignal zu steuern.

4. Mikroskop nach Anspruch 1, wobei die Heizeinheit (114) ein beheizbares hohles Adapterstück ist, das mit der Zufuhrleitung für Immersionsflüssigkeit (110) verbunden und ausgebildet ist, durch ein Adapterrohr des beheizbaren hohlen Adapterstücks laufende Immersionsflüssigkeit (112) zu erhitzen.

5. Mikroskop nach Anspruch 4, umfassend einen dritten Temperatursensor (316), der innerhalb des beheizbaren hohlen Adapterstücks angeordnet ist, sodass sich der dritte Temperatursensor in das Innere des Adapterrohrs erstreckt;
wobei die Steuereinheit (530) mit dem dritten Temperatursensor (316) verbunden und ausgebildet ist, die Leistung der Heizeinheit in Abhängigkeit von einem von dem dritten Temperatursensor empfangenen Temperatursignal zu steuern.

6. Mikroskop nach Anspruch 1, wobei kein Temperatursensor in oder
an der Heizeinheit (114) angeordnet ist.

7. Mikroskop nach einem der vorstehenden Ansprüche, umfassend eine Behälterheizung (714), die zum Erhitzen des Immersionsflüssigkeitsbehälters (740) konfiguriert ist.

8. Mikroskop nach Anspruch 7, wobei die Behälterheizung (714) mit der Steuereinheit (530) verbunden ist, wobei die Steuereinheit (530) ausgebildet ist, eine Leistung der Behälterheizung (714) in Abhängigkeit von dem Temperatursignal des ersten Temperatursensors (616) zu steuern.

9. Mikroskop nach Anspruch 8, wobei die Behälterheizung (714) einen Behältertemperatursensor (816) zum Erfassen einer Temperatur, die einer Temperatur des Immersionsflüssigkeitsbehälters (740) entspricht, und zum Ausgeben eines Temperatursignals entsprechend der erfassten Temperatur umfasst, wobei der Behältertemperatursensor (816) mit der Steuereinheit (530) verbunden ist, wobei die Steuereinheit (530) ausgebildet ist, die Leistung der Behälterheizung (714) zusätzlich in Abhängigkeit von dem Behältertemperatursignal des Behältertemperatursensors (816) zu steuern.

10. Mikroskop nach einem der vorstehenden Ansprüche, umfassend eine Immersionsflüssigkeitskappe (124), die an der Frontlinse (122) angeordnet ist, zum Zurückhalten von Immersionsflüssigkeit; und wobei der erste Temperatursensor (616) so angeordnet ist, dass der Erfassungsbereich (1018) des ersten Temperatursensors ein oberes Ende (1024) der Immersionsflüssigkeitskappe und einen Bereich unmittelbar oberhalb des oberen Endes einschließt.

11. Mikroskop nach einem der vorstehenden Ansprüche, wobei der erste Temperatursensor (616) ein Infrarotsensor ist.

12. Mikroskop nach einem der vorstehenden Ansprüche, ferner umfassend den Immersionsflüssigkeitsbehälter (740).

## Revendications

1. Microscope (900), comprenant
un objectif de microscope (120), et
un système d'immersion (100) destiné à fournir un liquide d'immersion (112) à une lentille frontale (122) de l'objectif de microscope (120), le système d'immersion (100) comprenant
une conduite d'alimentation en liquide d'immersion (110) configurée pour fournir du liquide d'immersion (112) depuis un réservoir de liquide d'immersion (740) jusqu'à la lentille frontale (122) de l'objectif de microscope (120),
une unité de chauffage (114) intégrée dans la conduite d'alimentation en liquide d'immersion (110),
un premier capteur de température (616) destiné à détecter une température et à délivrer un signal de température correspondant à la température détectée,
une unité de commande (530) connectée audit premier capteur de température (616) et à l'unité de chauffage (114) pour commander une puissance de l'unité de chauffage (114) en fonction du signal de température reçu dudit premier capteur de température (616), de telle sorte que la température détectée corresponde à une température prédéterminée, et
une platine de microscope (140) configurée pour recevoir un porte-échantillon (144) et/ou un échantillon (142), le système d'immersion (100) étant configuré pour fournir du liquide d'immersion (112) entre la lentille frontale (122) de l'objectif de microscope (120) et le porte-échantillon (144) et/ou l'échantillon (142), lorsqu'ils sont reçus ;
**caractérisé en ce que**
ledit premier capteur de température (616) étant disposé à une distance prédéterminée de 1 à 30 mm de l'objectif de microscope (120) pour une détection sans contact d'une température correspondant à une température du liquide d'immersion (112) fourni à la lentille frontale (122) de l'objectif de microscope (120),
dans lequel aucun dispositif de chauffage n'est monté dans ou sur l'objectif de microscope,
dans lequel le premier capteur de température (616) est disposé de telle sorte qu'un champ de détection (1018) du premier capteur de température inclut en outre une partie d'une surface inférieure (1044) du porte-échantillon (144) et/ou une partie de l'échantillon (142),
dans lequel l'unité de commande (530) est configurée pour utiliser une table de correspondance pour commander la puissance de l'unité de chauffage (114) ;
dans lequel la table de correspondance inclut une corrélation de signaux de température tels que détectés par le premier capteur de température avec des températures correspondantes à l'intérieur du porte-échantillon (144) ou avec des températures correspondantes de l'échantillon (142).

2. Microscope selon la revendication 1, dans lequel l'unité de chauffage (114) est sous la forme d'un manchon chauffant entourant la conduite d'alimentation en liquide d'immersion (110).

3. Microscope selon la revendication 2, comprenant un deuxième capteur de température (116) disposé dans ou sur le manchon chauffant et connecté à l'unité de commande, dans lequel l'unité de commande (530) est configurée pour commander la puissance de l'unité de chauffage en fonction en outre d'un signal de température reçu du deuxième capteur de température.

4. Microscope selon la revendication 1, dans lequel l'unité de chauffage (114) est une pièce adaptatrice creuse chauffante connectée à la conduite d'alimentation en liquide d'immersion (110) et configurée pour chauffer du liquide d'immersion (112) s'écoulant à travers un tube adaptateur de la pièce adaptatrice creuse chauffante.

5. Microscope selon la revendication 4, comprenant un troisième capteur de température (316) disposé à l'intérieur de la pièce adaptatrice creuse chauffante, de telle sorte que le troisième capteur de température s'étende dans l'intérieur du tube adaptateur ;
dans lequel l'unité de commande (530) est connectée au troisième capteur de température (316) et configurée pour commander la puissance de l'unité de chauffage en fonction d'un signal de température reçu du troisième capteur de température.

6. Microscope selon la revendication 1, dans lequel aucun capteur de température n'est disposé dans ou sur l'unité de chauffage (114).

7. Microscope selon l'une quelconque des revendications précédentes, comprenant un dispositif de chauffage du réservoir (714) configuré pour chauffer le réservoir de liquide d'immersion (740).

8. Microscope selon la revendication 7, dans lequel le dispositif de chauffage du réservoir (714) est connecté à l'unité de commande (530), dans lequel l'unité de commande (530) est configurée pour commander une puissance du dispositif de chauffage du réservoir (714) en fonction du signal de température du premier capteur de température (616).

9. Microscope selon la revendication 8, dans lequel le dispositif de chauffage du réservoir (714) comprend un capteur de température du réservoir (816) destiné à détecter une température correspondant à une température du réservoir de liquide d'immersion (740) et à délivrer un signal de température correspondant à la température détectée, ledit capteur de température du réservoir (816) étant connecté à l'unité de commande (530), dans lequel l'unité de commande (530) est configurée pour commander la puissance du dispositif de chauffage du réservoir (714) en fonction en outre du signal de température du réservoir délivré par le capteur de température du réservoir (816).

10. Microscope selon l'une quelconque des revendications précédentes, comprenant un capuchon de liquide d'immersion (124) disposé au niveau de la lentille frontale (122) pour retenir le liquide d'immersion ; et dans lequel le premier capteur de température (616) est disposé de telle sorte que le champ de détection (1018) du premier capteur de température inclut une extrémité supérieure (1024) du capuchon de liquide d'immersion et une région immédiatement au-dessus de l'extrémité supérieure.

11. Microscope selon l'une quelconque des revendications précédentes, dans lequel le premier capteur de température (616) est un capteur infrarouge.

12. Microscope selon l'une quelconque des revendications précédentes, comprenant en outre le réservoir de liquide d'immersion (740).
